# EUROPEAN PATENT SPECIFICATION

(11) **EP 3 499 655 B1**
(45) Date of publication and mention of the grant of the patent: **31.03.2021**
(21) Application number: 17207129.2
(22) Date of filing: 13.12.2017
(51) Int. Cl.: H01R 43/16, H01M 2/20, H01R 13/11, H02G 5/00

(54) **ELECTRICAL BUS BAR**
STROMSAMMELSCHIENE
BARRE DE RACCORDEMENT ÉLECTRIQUE

(43) Date of publication of application: 19.06.2019
(73) Proprietor: Aptiv Technologies Limited, St. Michael (BB)
(72) Inventor: GUILLANTON, Mélanie, 28230 Epernon (FR); ALBERTIN, Christian, 28000 Chartres (FR); DION, Sylvain, 78550 Richebourg (FR); CORMIER, François, 45230 Dammarie sur Loing (FR)
(74) Representative: INNOV-GROUP

(56) References cited:
- CA-A- 892 781
- DE-A1-102011 076 624
- US-A1- 2013 000 957

## Description

### TECHNICAL FIELD OF INVENTION

The invention relates to an electrical bus bar for high current application in electrical driven vehicles or hybrid vehicles. Furthermore, the invention relates to a method for manufacturing the electrical bus bar.

### BACKGROUND OF INVENTION

Electrical connections employing bus bars are used in different types of connector systems. One application is an automotive application, such as for connection to a battery of a vehicle. In some applications, spacing around the battery, such as above the battery, in front of the battery, to one side or the other of the battery, may be limited. There may not be room for a bus bar to extend into such space, or there may not be room around the battery to get a tool for connecting the bus bar to the power terminal of the battery. Additionally, connecting and un-connecting the bus bar to the power terminal of the battery may be time consuming or require special, expensive tools. In some applications, two batteries need to be connected together in series or in parallel and a bus bar is needed to connect the power terminal of one battery to the power terminal of another battery. Problems arise in connecting one battery to another battery. For example, the spacing between the batteries may vary from application to application. The position tolerance has a wide range between any adjacent two batteries. Additionally, vibration may cause the batteries to move relative to one another.

There is a need for a flexible connection in such applications. Solutions to increase flexibility of electrical connections are known in the art. The solutions usually use a high number of thin electrical conductors (multilayer assembly) that are arranged parallel to each other, to provide flexibility. On the other hand, when a bus bar is required to carry high currents, the thickness of the bus bar increases and manufacturing of such a bus bar is difficult and expensive. In some high current application, the tolerances of the system that need to be considered are in a narrow range, but still have to be taken into account. For such application the flexibility and the ability to carry current need to be balanced.

Thus, there is the need in the art to provide an electrical bus bar for power applications in electric vehicles that provides a necessary amount of mechanical flexibility as well as the ability to carry high current between the power devices. Furthermore, an electrical bus bar that is easy and cheap to manufacture.

An electrical bus bar according claim1 and the method to manufacture the electrical bus bar according claim 15 solve these and other objects, which become apparent upon reading the following description.

The documents US20130000957 and DE102011076624 disclose an electrical bus bar made by at least two stacked flat parts comprising links acting as hinges.

### SUMMARY OF THE INVENTION

The present application relates to an electrical bus bar comprising: a first mounting portion adapted to be connected to a first counter connector, a second mounting portion adapted to be connected to a second counter connector and a flexible section between the first and second mounting portions. The bus bar comprises at least a flat first part and at least a flat second part. Each flat part extends from the first mounting portion to the second mounting portion and is arranged in a stacked configuration. The flat first part and the flat second part is made of a metal sheet. A first stripe of the metal sheet extends from a body edge of the flat first part to a body edge of the flat second part forming a first link. The first link is dimensioned to keep a first contact surface of the flat first part and a second contact surface of the flat second part in intimate contact.

The disclosed invention as defined in the appended claims combines the advantages inflexibility of electrical bus bars having a high number of electric conductive layers with the high current properties of bus bars made of solid material. In some high current application, the tolerance, that has to be considered is e.g. in the range of 1-3 mm. The flexibility that is needed while assembling the bus bar into the vehicle is quite low. A bus bar made of three solid parts arranged parallel to each other provide little flexibility while assembling the bus bar. The solid flat parts are able to move very little in relation to each other. This little movement provides little flexibility. After assembling, the solid parts, in combination, provide the ability to carry high currents. The solid flat parts are linked with a metal stripe, extending from the edges, that keeps the flat parts in a stacked configuration. The link has a length that allows movement of the flat parts. The link acts as a hinge that allows to fold the linked flat parts. When the parts are arranged with the contact surfaces contacting each other, the link prevents movement that separate the contact surfaces. The links are preferable attached in the mounting portions. That keeps the electrical bus bar easy to handle.

The present application discloses also a method for manufacturing an electrical bus bar according to any of claims 1 to 5. The method comprises the steps:
a) providing a metal sheet and a tooled stamping machine;
b) inserting the metal sheet into the stamping machine;
c) stamp the flat first part and flat second part thereby forming the arm and the opening;
d) folding the flat first part and flat second part to a stacked configuration, whereby the firs link limits the movement of the flat first part and flat second part;
e) Removing the carrier strip.
The method produces an electrical bus bar using one stamping machine and one metal sheet. The method provides also the advantage to be flexible concerning the number of flat parts that are stacked to get the electrical bus bar.

According to the invention, the flat first part comprises an arm, protruding from the first contact surface, located in the flexible section and wherein the flat second part comprises an opening located in the flexible section, wherein the arm is formed to protrude into the opening, thereby limiting movement of the flat first part in relation to the flat second part. The arm protrudes into the opening and prevents movement of the flat parts in relation to each other. If more flexibility is requested, the opening can be designed slightly bigger than the cross-sectional farm. This provides little movement of the arm inside the opening. Hence, the flat parts can move a little bit more in relation to each other.

Preferably, the arm protrudes through the opening and wherein an arm end is in contact to a third contact surface of the flat second part opposite to the second contact surface to keep the first contact surface of the flat first part and the second contact surface of the flat second part in intimate contact. The intimate contact reduces the electrical resistance of the electrical bus bar because the bus bar acts as a solid part. On the other hand, the flat parts can move little in relation to each other, when forced while assembly into the vehicle.

Advantageously, the electrical bus bar is made of one piece of metal sheet. This reduces the costs for manufacturing the electrical bus bar

Preferably, all contact surfaces are plated with tin. A combination of a tin plating for the bus bar and silver for a terminal works well in practice. The contact surfaces can be plated to prevent corrosion or to reduce electrical resistance.

Advantageously, the electrical bus bar has an elongated shape aligned along a longitudinal axis, wherein the first link is attached to the body edges of the first flat part and the second flat part at a positions where the body edges are substantially parallel to the longitudinal axis. This embodiment enables the usage of very easy design for the first link. The link has to be just a straight strip of the sheet metal.

Preferably, the electrical bus bar comprises a flat third part, extending from the first mounting portion to the second mounting portion, made of the metal sheet and arranged to the stacked configuration, wherein a second strip of the metal sheet extends from a body edge of the flat first part to a body edge of the flat third part forming a second link, wherein the flat third part comprises a forth contact surface that is in intimate contact with the third contact surface. The additional flat part improves, dependent on the requirements and dimensions, the electrical resistance or the flexibility.

Preferably the first link and the second link are attached to the body edges at positions where the body edges are parallel to the longitudinal axis. This embodiment enables the usage of a very easy design for the first and second link. The links have to be just straight stripes of the sheet metal.

In a preferred embodiment, the second link is attached to the body edge of the first flat part and to the body edge of the third flat part at positions where the body edges are substantially parallel to the longitudinal axis and wherein the first link and the second link are arranged on positions, opposite to each other, along a transversal axis, perpendicular to the longitudinal axis. The two links opposite to each other provide a stable fixation of the flat parts. The contact surfaces are kept in intimidate contact.

Preferably, the extension of the first link is smaller than the extension of the second link. The first link is adapted to hold the first and second flat part, that are closer to each other, in position The second link is adapted to hold the first and third flat part, that have a distance to each other because the second flat part is in between, in position.

Advantageously, the flat third part comprises a second opening located in the flexible section, wherein the arm is formed to protrude into the second opening, thereby limiting movement of the flat first part in relation to the flat second part and the flat third part. The arm protrudes into the opening and prevents movement of the flat parts in relation to each other. If more flexibility is requested, the opening can be designed slightly bigger than the cross-sectional of the arm. This provides little movement of the arm inside the opening. Hence, the flat parts can move a little bit more in relation to each other.

Preferably, the arm protrudes through the second opening and wherein the arm end is in contact to a fifth contact surface of the flat third part opposite to the fourth contact surface to keep the first contact surface of the flat first part and the second contact surface of the flat second part, furthermore the third contact surface of the flat second part and the fourth contact surface of the flat third part in intimate contact. The intimate contact reduces the electrical resistance of the electrical bus bar because the bus bar acts as a solid part. On the other hand, the flat parts can move little in relation to each other, when forced while assembly into the vehicle.

In a preferred embodiment, the first mounting portion comprises a first connecting opening and the second mounting portion comprises a second connecting opening. The openings receive bolts of high-power devises. The bolts are connected to the mounting portions by screw connections. The screw connections press the flat parts against each other and reduce this way the electrical resistance of the electrical bus bar.

Advantageously, the at least one of the first connecting opening or the second connecting opening is equipped with an electrical terminal. The electrical terminal is pressed in the connector opening, thereby mechanically connecting the flat parts. The press-fit connection also provides a low resistant electrical connection between the flat parts and the electrical terminal.

### Description of the preferred embodiments

In the following, the invention is described exemplarily with reference to the enclosed figures, in which
- Fig. 1: shows a perspective, view to a preassembled two-part electrical bus bar attached on a carrier strip;
- Fig. 2: shows a perspective, view to a preassembled three-part electrical bus bar attached on a carrier strip;
- Fig. 3: shows a perspective, view to a preassembled three-part electrical bus bar while manufacturing;
- Fig. 4: shows a perspective, view to a preassembled three-part electrical bus bar while manufacturing;
- Fig. 5: shows a perspective, view to a three-part electrical bus bar;
- Fig. 6: shows a perspective, view to a three-part electrical bus bar equipped with an electrical terminal;

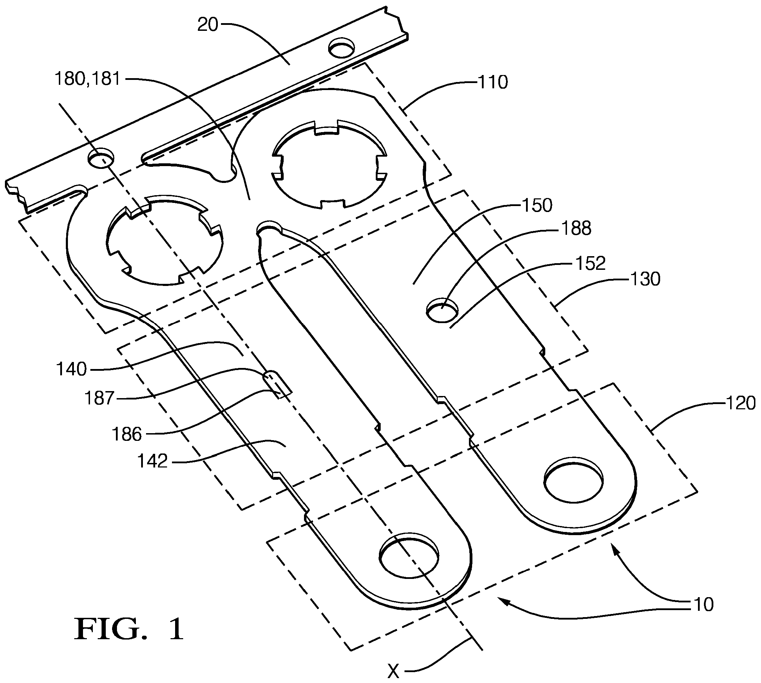

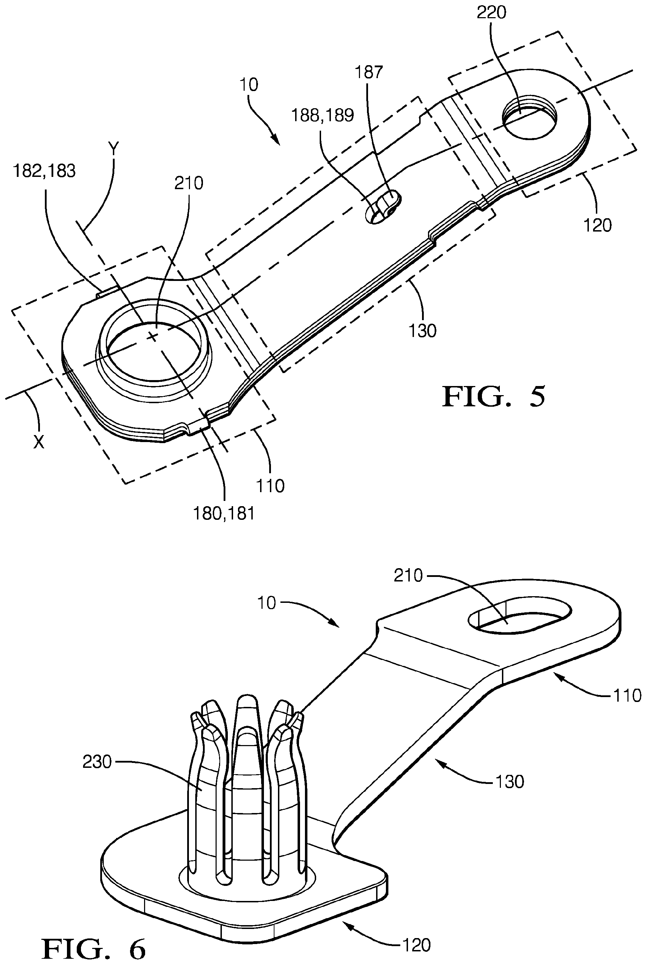

Figure 1 shows a perspective, view to a preassembled two-part electrical bus bar 10 attached on a carrier strip 20. The electrical bus bar 10 comprising: a first mounting portion 110 adapted to be connected to a first counter connector, a second mounting portion 120 adapted to be connected to a second counter connector and a flexible section 130 between the first and second mounting portions 110, 120. The bus bar 10 comprises at least a flat first part 140 and at least a flat second part 150. Each flat part 140, 150 extends from the first mounting portion 110 to the second mounting portion 120 and is arranged in a stacked configuration when the electrical bus bar is finalized, by folding the two flat parts. The flat first part 140 and the flat second part 150 is made of a metal sheet 30. A first stripe 180 of the metal sheet 30 extends from a body edge of the flat first part 140 to a body edge of the flat second part 150 forming a first link 181. The first link 181 is dimensioned to keep a first contact surface 142 of the flat first part 140 and a second contact surface 152 of the flat second part 150 in intimate contact, in the stacked configuration (see figure 5). The flat first part 140 comprises an arm 186, protruding from the first contact surface 142, located in the flexible section 130. The flat second part 150 comprises an opening 188 located in the flexible section 130. The arm 186 is also made from the metal sheet 30 e.g. by stamping. The arm 186 is formed to protrude into the opening, thereby limiting movement of the flat first part 140 in relation to the flat second part 150. The arm 186 protrudes through the opening 188. An arm end 187 is in contact to a third contact surface 154 of the flat second part 150 opposite to the second contact surface 152 to keep the first contact surface 142 of the flat first part 140 and the second contact surface 152 of the flat second part 150 in intimate contact. The cooperation of the flat parts 140, 150 is also shown in figure 5. The electrical bus bar 10 has an elongated shape aligned along a longitudinal axis X, wherein the first link 181 is attached to the body edges of the first flat part 140 and the second flat part 150 at a positions where the body edges are substantially parallel to the longitudinal axis X.

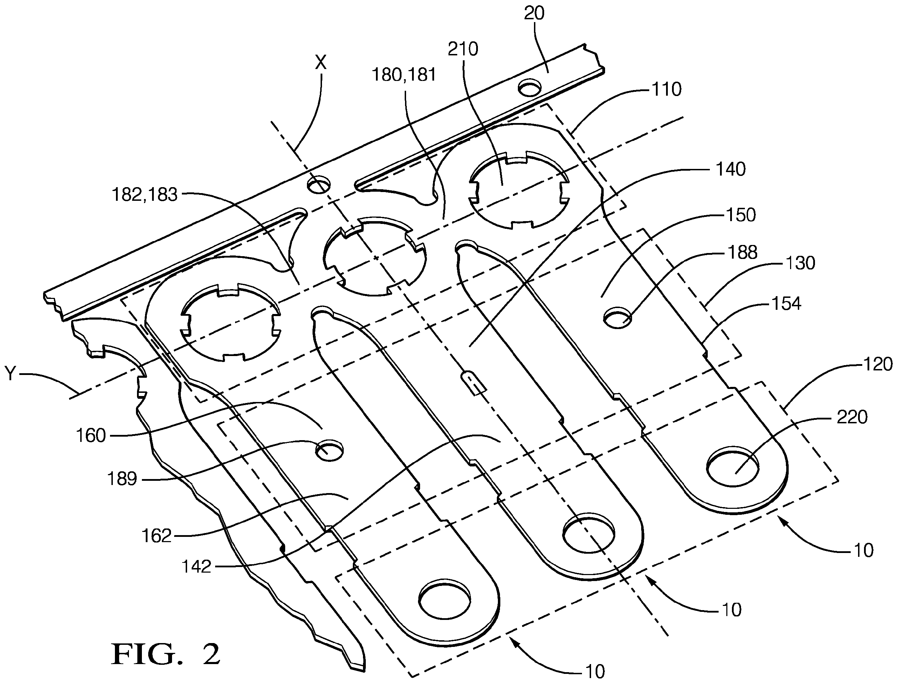

Figure 2 shows a perspective, view to a preassembled three-part electrical bus bar 10 attached on a carrier strip 20. The electrical bus bar 10 comprises a flat third part 160, extending from the first mounting portion 110 to the second mounting portion 120, made of the metal sheet 30 and arranged to the stacked configuration (when finalized of the flat first part 140 and the flat second part 150. A second strip 182 of the metal sheet 30 extends from a body edge of the flat first part 140 to a body edge of the flat third part 160 forming a second link 183. The flat third part 160 comprises a forth contact surface 162 that is in intimate contact with the third contact surface 154. The cooperation of the flat parts 140, 150, 160 is shown in figure 5. The first link 181 and the second link 183 are attached to the body edges at positions where the body edges are parallel to the longitudinal axis X. The second link 183 is attached to the body edge of the first flat part 140 and to the body edge of the third flat part 160 at positions where the body edges are substantially parallel to the longitudinal axis X. The first link 181 and the second link 183 are arranged on positions, opposite to each other, along a transversal axis Y, perpendicular to the longitudinal axis X. The extension of the first link 181 is smaller than the extension of the second link 183. The flat third part 160 comprises a second opening 189 located in the flexible section 130. The arm 186 is formed to protrude into the second opening 189, thereby limiting movement of the flat first part 140 in relation to the flat second part 150 and the flat third part 160.

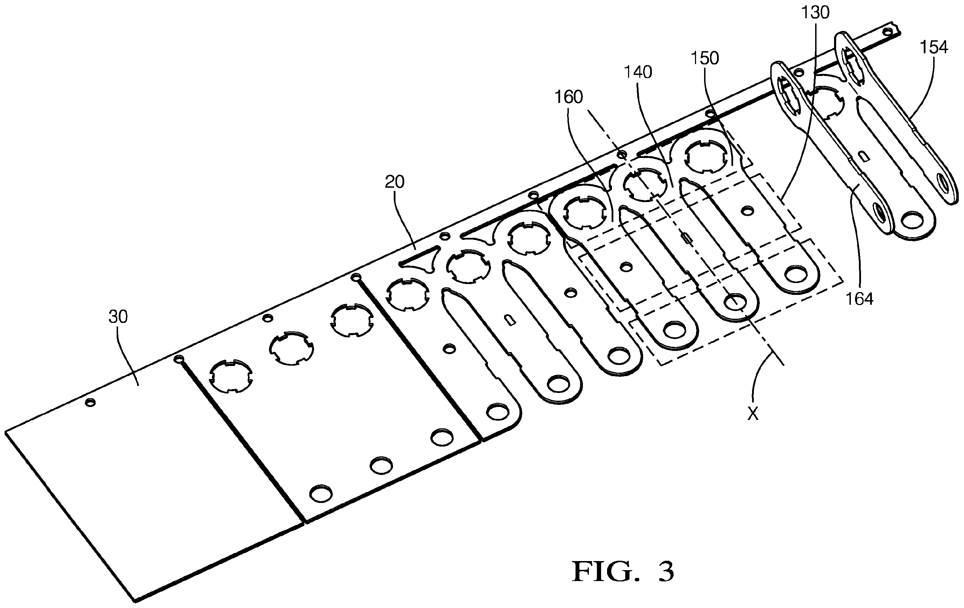

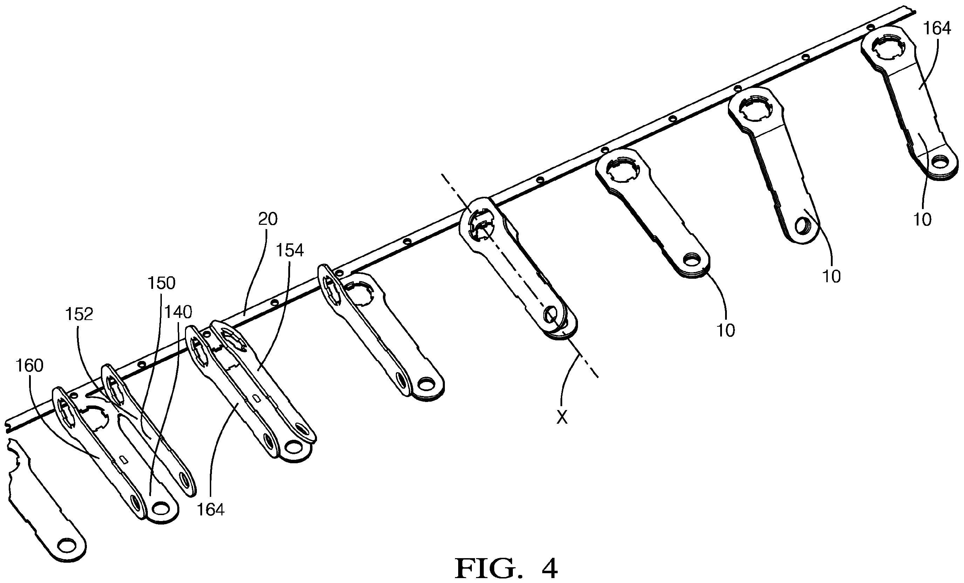

Figure 3 and figure 4 show a perspective, view to a preassembled three-part electrical bus bar while manufacturing. The electrical bus bar 10 is made of one piece of metal sheet 30. The contact surfaces 142, 152, 154 can be plated with tin. Until finalization, the flat parts are attached to the carrier strip 20. In a first production step, the three flat parts are stamped from the metal sheet 30. Only the flat first part 140 stays connected to the carrier strip 20. In the next step, the flat second part 150 is folded towards the flat first part 140 using the first link 181 as a hinge until the flat second part 150 touches the flat first part 140. Than the flat third part 160 is folded towards the flat second part 150 using the second link 183 as a hinge until the flat third part 160 touches the flat second part 140. The arm 186 protrudes through the first opening 189 and the second opening. Finally the arm end 187 is the formed to touch the fifth contact surface 164. It may be necessary to deform the finally assembled bus bar 10 along the longitudinal axis X to fulfill the set requirements.

Figure. 5 shows a perspective, view to a three-part electrical bus bar 10. The tree flat parts 140, 150, 150 are arranged in the stacked configuration. The first link 181 and the second link 183 are attached to the body edges at positions where the body edges are parallel to the longitudinal axis X. The second link 183 is attached to the body edge of the first flat part 140 and to the body edge of the third flat part 160 at positions where the body edges are parallel to the longitudinal axis X. The first link 181 and the second link 183 are arranged on positions, opposite to each other, along a transversal axis Y, perpendicular to the longitudinal axis X. The arm 186 protrudes through the second opening 189 and wherein the arm end 187 is in contact to a fifth contact surface 164 of the flat third part 160 opposite to the fourth contact surface 162 to keep the first contact surface 142 of the flat first part 140 and the second contact surface 152 of the flat second part 150, furthermore the third contact surface 154 of the flat second part 150 and the fourth contact surface 162 of the flat third part 160 in intimate contact. The first mounting portion 110 comprises a first connecting opening 210 and the second mounting portion 120 comprises a second connecting opening 220.

Figure 6 shows a perspective, view to a three-part electrical bus bar 10 equipped with an electrical terminal 230. In this embodiment the second connecting opening 220 is equipped with the electrical terminal 230.

## Claims

1. An electrical bus bar (10) comprising: a first mounting portion (110) adapted to be connected to a first counter connector, a second mounting portion (120) adapted to be connected to a second counter connector and a flexible section (130) between the first and second mounting portions (110, 120), wherein the bus bar (10) comprises at least a flat first part (140) and at least a flat second part (150), wherein each flat part (140, 150) extends from the first mounting portion (110) to the second mounting portion (120) and is arranged in a stacked configuration, wherein the flat first part (140) and the flat second part (150) is made of a metal sheet (30), wherein a first stripe (180) of the metal sheet (30) extends from a body edge of the flat first part (140) to a body edge of the flat second part (150) forming a first link (181), wherein the first link (181) is dimensioned to keep a first contact surface (142) of the flat first part (140) and a second contact surface (152) of the flat second part (150) in intimate contact, **characterized in that** the flat first part (140) comprises an arm (186), protruding from the first contact surface (142), located in the flexible section (130) and wherein the flat second part (150) comprises an opening (188) located in the flexible section (130), wherein the arm (186) is formed to protrude into the opening, thereby limiting movement of the flat first part (140) in relation to the flat second part (150).

2. An electrical bus bar (10) according to the preceding claim, wherein the arm (186) protrudes through the opening (188) and wherein an arm end (187) is in contact to a third contact surface (154) of the flat second part (150) opposite to the second contact surface (152) to keep the first contact surface (142) of the flat first part (140) and the second contact surface (152) of the flat second part (150) in intimate contact.

3. An electrical bus bar (10) according to any preceding claim, wherein the electrical bus bar (10) is made of one piece of metal sheet (30).

4. An electrical bus bar (10) according to any preceding claim, wherein all contact surfaces (142, 152, 154) are plated with tin.

5. An electrical bus bar (10) according to any preceding claim, wherein the electrical bus bar (10) has an elongated shape aligned along a longitudinal axis (X), wherein the first link (181) is attached to the body edges of the first flat part (140) and the second flat part (150) at a positions where the body edges are substantially parallel to the longitudinal axis (X).

6. An electrical bus bar (10) according to any preceding claim, wherein the electrical bus bar (10) comprises a flat third part (160), extending from the first mounting portion (110) to the second mounting portion (120), made of the metal sheet (30) and arranged to the stacked configuration, wherein a second strip (182) of the metal sheet (30) extends from a body edge of the flat first part (140) to a body edge of the flat third part (160) forming a second link (183), wherein the flat third part (160) comprises a forth contact surface (162) that is in intimate contact with the third contact surface (154).

7. An electrical bus bar (10) according to claim 5 and claim 6, wherein the first link (181) and the second link (183) are attached to the body edges at positions where the body edges are parallel to the longitudinal axis (X).

8. An electrical bus bar (10) according to the preceding claim, wherein the second link (183) is attached to the body edge of the first flat part (140) and to the body edge of the third flat part (160) at positions where the body edges are substantially parallel to the longitudinal axis (X) and wherein the first link (181) and the second link (183) are arranged on positions, opposite to each other, along a transversal axis (Y), perpendicular to the longitudinal axis (X).

9. An electrical bus bar (10) according to any of claims 6 to 8, wherein the extension of the first link (181) is smaller than the extension of the second link (183).

10. An electrical bus bar (10) according to any of claims 6 to 9, wherein the flat third part (160) comprises a second opening (189) located in the flexible section (130), wherein the arm (186) is formed to protrude into the second opening (189), thereby limiting movement of the flat first part (140) in relation to the flat second part (150) and the flat third part (160).

11. An electrical bus bar (10) according to the preceding claim, wherein the arm (186) protrudes through the second opening (189) and wherein the arm end (187) is in contact to a fifth contact surface (164) of the flat third part (160) opposite to the fourth contact surface (162) to keep the first contact surface (142) of the flat first part (140) and the second contact surface (152) of the flat second part (150), furthermore the third contact surface (154) of the flat second part (150) and the fourth contact surface (162) of the flat third part (160) in intimate contact.

12. An electrical bus bar (10) according to any preceding claim, wherein the first mounting portion (110) comprises a first connecting opening (210) and the second mounting portion (120) comprises a second connecting opening (220).

13. An electrical bus bar (10) according to the preceding claim, wherein at least one of the first connecting opening (210) or the second connecting opening (220) is equipped with an electrical terminal (230).

14. Method for manufacturing an electrical bus bar (10) according to any of claims 1 to 5 comprising the steps:
a) providing a metal sheet (30) and a tooled stamping machine;
b) inserting the metal sheet (30) into the stamping machine; **characterized in that** it further comprise the steps:
c) stamp the flat first part (140) and flat second part (140) thereby forming the arm (186) and the opening (188);
d) folding the flat first part (140) and flat second part (140) to a stacked configuration, whereby the firs link (181) limits the movement of the flat first part (140) and flat second part (140);
e) Removing the carrier strip (20).

## Patentansprüche

1. Stromsammelschiene (10), umfassend: einen ersten Montageabschnitt (110), der dazu eingerichtet ist, mit einem ersten Gegenverbinder verbunden zu werden, einen zweiten Montageabschnitt (120), der dazu eingerichtet ist, mit einem zweiten Gegenverbinder verbunden zu werden, und einen flexiblen Abschnitt (130) zwischen dem ersten und dem zweiten Montageabschnitt (110, 120), wobei die Stromsammelschiene (10) mindestens ein flaches erstes Teil (140) und mindestens ein flaches zweites Teil (150) umfasst, wobei jedes flache Teil (140, 150) sich vom ersten Montageabschnitt (110) zum zweiten Montageabschnitt (120) erstreckt und in einer gestapelten Auslegung angeordnet ist, wobei das flache erste Teil (140) und das flache zweite Teil (150) aus einem Metallblech (30) hergestellt sind, wobei sich ein erster Streifen (180) des Metallblechs (30) von einer Körperkante des flachen ersten Teils (140) zu einer Körperkante des flachen zweiten Teils (150) erstreckt und einen ersten Verbindungssteg (181) bildet, wobei der erste Verbindungssteg (181) so bemessen ist, dass er eine erste Kontaktfläche (142) des flachen ersten Teils (140) und eine zweite Kontaktfläche (152) des flachen zweiten Teils (150) in engem Kontakt hält, **dadurch gekennzeichnet, dass** das flache erste Teil (140) einen Arm (186) umfasst, der von der ersten Kontaktfläche (142) vorsteht, der im flexiblen Abschnitt (130) angeordnet ist, und wobei das flache zweite Teil (150) eine Öffnung (188) umfasst, die im flexiblen Abschnitt (130) angeordnet ist, wobei der Arm (186) dazu ausgebildet ist, in die Öffnung hineinzuragen, wodurch Bewegung des flachen ersten Teils (140) in Bezug auf das flache zweite Teil (150) begrenzt wird.

2. Stromsammelschiene (10) nach dem vorhergehenden Anspruch, wobei der Arm (186) durch die Öffnung (188) hindurchragt und wobei ein Armende (187) in Kontakt mit einer dritten Kontaktfläche (154) des flachen zweiten Teils (150) gegenüber der zweiten Kontaktfläche (152) ist, um die erste Kontaktfläche (142) des flachen ersten Teils (140) und die zweite Kontaktfläche (152) des flachen zweiten Teils (150) in engem Kontakt zu halten.

3. Stromsammelschiene (10) nach einem der vorhergehenden Ansprüche, wobei die Stromsammelschiene (10) aus einem Stück Metallblech (30) hergestellt ist.

4. Stromsammelschiene (10) nach einem der vorhergehenden Ansprüche, wobei alle Kontaktflächen (142, 152, 154) mit Zinn plattiert sind.

5. Stromsammelschiene (10) nach einem der vorhergehenden Ansprüche, wobei die Stromsammelschiene (10) eine längliche Form aufweist, die entlang einer Längsachse (X) ausgerichtet ist, wobei der erste Verbindungssteg (181) an den Körperkanten des ersten flachen Teils (140) und des zweiten flachen Teils (150) an einer Position befestigt ist, an der die Körperkanten im Wesentlichen parallel zur Längsachse (X) sind.

6. Stromsammelschiene (10) nach einem der vorhergehenden Ansprüche, wobei die Stromsammelschiene (10) ein flaches drittes Teil (160) umfasst, das sich vom ersten Montageabschnitt (110) zum zweiten Montageabschnitt (120) erstreckt, aus dem Metallblech (30) hergestellt und in der gestapelten Auslegung angeordnet ist, wobei sich ein zweiter Streifen (182) des Metallblechs (30) von einer Körperkante des flachen ersten Teils (140) zu einer Körperkante des flachen dritten Teils (160) erstreckt und einen zweiten Verbindungssteg (183) bildet, wobei das flache dritte Teil (160) eine vierte Kontaktfläche (162) umfasst, die in engem Kontakt mit der dritten Kontaktfläche (154) steht.

7. Stromsammelschiene (10) nach Anspruch 5 und Anspruch 6, wobei der erste Verbindungssteg (181) und der zweite Verbindungssteg (183) an den Körperkanten an Positionen befestigt sind, an denen die Körperkanten parallel zur Längsachse (X) sind.

8. Stromsammelschiene (10) nach dem vorhergehenden Anspruch, wobei der zweite Verbindungssteg (183) an der Körperkante des ersten flachen Teils (140) und an der Körperkante des dritten flachen Teils (160) an Positionen befestigt ist, an denen die Körperkanten im Wesentlichen parallel zur Längsachse (X) sind, und wobei der erste Verbindungssteg (181) und der zweite Verbindungssteg (183) an einander gegenüberliegenden Positionen entlang einer Querachse (Y), die senkrecht zur Längsachse (X) steht, angeordnet sind.

9. Stromsammelschiene (10) nach einem der Ansprüche 6 bis 8, wobei die Ausdehnung des ersten Verbindungsstegs (181) kleiner ist als die Ausdehnung des zweiten Verbindungsstegs (183).

10. Stromsammelschiene (10) nach einem der Ansprüche 6 bis 9, wobei das flache dritte Teil (160) eine zweite Öffnung (189) umfasst, die im flexiblen Abschnitt (130) angeordnet ist, wobei der Arm (186) so ausgebildet ist, dass er in die zweite Öffnung (189) hineinragt, wodurch Bewegung des flachen ersten Teils (140) in Bezug auf das flache zweite Teil (150) und das flache dritte Teil (160) begrenzt wird.

11. Stromsammelschiene (10) nach dem vorhergehenden Anspruch, wobei der Arm (186) durch die zweite Öffnung (189) hindurchragt und wobei das Armende (187) in Kontakt mit einer fünften Kontaktfläche (164) des flachen dritten Teils (160) gegenüber der vierten Kontaktfläche (162) steht, um die erste Kontaktfläche (142) des flachen ersten Teils (140) und die zweite Kontaktfläche (152) des flachen zweiten Teils (150), ferner die dritte Kontaktfläche (154) des flachen zweiten Teils (150) und die vierte Kontaktfläche (162) des flachen dritten Teils (160) in engem Kontakt zu halten.

12. Stromsammelschiene (10) nach einem der vorhergehenden Ansprüche, wobei der erste Montageabschnitt (110) eine erste Anschlussöffnung (210) und der zweite Montageabschnitt (120) eine zweite Anschlussöffnung (220) umfasst.

13. Stromsammelschiene (10) nach dem vorhergehenden Anspruch, wobei mindestens eines von der ersten Anschlussöffnung (210) oder der zweiten Anschlussöffnung (220) mit einem elektrischen Anschluss (230) ausgestattet ist.

14. Verfahren zur Herstellung einer Stromsammelschiene (10) nach einem der Ansprüche 1 bis 5, umfassend die folgenden Schritte:
a) Bereitstellen eines Metallblechs (30) und einer Stanzmaschine mit Werkzeug;
b) Einführen des Metallblechs (30) in die Stanzmaschine; **dadurch gekennzeichnet, dass** das Verfahren ferner die folgenden Schritte umfasst:
c) Stanzen des flachen ersten Teils (140) und des flachen zweiten Teils (140), wodurch der Arm (186) und die Öffnung (188) gebildet werden;
d) Falten des flachen ersten Teils (140) und des flachen zweiten Teils (140) zu einer gestapelten Auslegung, wodurch der erste Verbindungssteg (181) die Bewegung des flachen ersten Teils (140) und des flachen zweiten Teils (140) begrenzt;
e) Entfernen des Trägerstreifens (20).

## Revendications

1. Barre de connection électrique (10) comprenant: une première partie de montage (110) conçue pour être connectée à un premier contre-connecteur, une seconde partie de montage (120) conçue pour être connectée à un second contre-connecteur et une section flexible (130) entre les première et seconde parties de montage (110, 120), la barre de connexion (10) comprenant au moins une première partie plate (140) et au moins une deuxième partie plate (150), dans laquelle chaque partie plate (140, 150) s'étend depuis la première partie de montage (110) vers la seconde partie de montage (120) et est agencée dans une configuration empilée, dans laquelle la première partie plate (140) et la deuxième partie plate (150) sont constituées d'une feuille métallique (30), dans laquelle une première bande (180) de la feuille métallique (30) s'étend depuis un bord de corps de la première partie plate (140) vers un bord de corps de la deuxième partie plate (150) formant une première liaison (181), dans laquelle la première liaison (181) est dimensionnée pour garder une première surface de contact (142) de la première partie plate (140) et une deuxième surface de contact (152) de la deuxième partie plate (150) en contact étroit, **caractérisée en ce que** la première partie plate (140) comprend un bras (186), dépassant de la première surface de contact (142), situé dans la section flexible (130) et dans laquelle la deuxième partie plate (150) comprend une ouverture (188) située dans la section flexible (130), dans laquelle le bras (186) est formé pour dépasser dans l'ouverture, ce qui permet de limiter le mouvement de la première partie plate (140) par rapport à la deuxième partie plate (150).

2. Barre de connexion électrique (10) selon la revendication précédente, dans laquelle le bras (186) dépasse à travers l'ouverture (188) et dans laquelle une extrémité de bras (187) est en contact avec une troisième surface de contact (154) de la deuxième partie plate (150) opposée à la deuxième surface de contact (152) pour garder la première surface de contact (142) de la première partie plate (140) et la deuxième surface de contact (152) de la deuxième partie plate (150) en contact étroit.

3. Barre de connexion électrique (10) selon l'une quelconque des revendications précédentes, la barre de connexion électrique (10) étant constituée d'un morceau de feuille métallique (30).

4. Barre de connexion électrique (10) selon l'une quelconque des revendications précédentes, dans laquelle toutes les surfaces de contact (142, 152, 154) sont plaquées d'étain.

5. Barre de connexion électrique (10) selon l'une quelconque des revendications précédentes, la barre de connexion électrique (10) ayant une forme allonge alignée le long d'un axe longitudinal (X), dans laquelle la première liaison (181) est fixée aux bords de corps de la première partie plate (140) et de la deuxième partie plate (150) au niveau de positions où les bords de corps sont sensiblement parallèles à l'axe longitudinal (X).

6. Barre de connexion électrique (10) selon l'une quelconque des revendications précédentes, la barre de connexion électrique (10) comprenant une troisième partie plate (160), s'étendant depuis la première partie de montage (110) vers la seconde partie de montage (120), constituée d'une feuille métallique (30) et agencée dans la configuration empilée, dans laquelle une seconde bande (182) de la feuille métallique (30) s'étend depuis un bord de corps de la première partie plate (140) vers un bord de corps de la troisième partie plate (160) formant une seconde liaison (183), dans laquelle la troisième partie plate (160) comprend une quatrième surface de contact (162) qui est en contact étroit avec la troisième surface de contact (154).

7. Barre de connexion électrique (10) selon la revendication 5 et la revendication 6, dans laquelle la première liaison (181) et la seconde liaison (183) sont fixées aux bords de corps au niveau de positions où les bords de corps sont parallèles à l'axe longitudinal (X).

8. Barre de connexion électrique (10) selon la revendication précédente, dans laquelle la seconde liaison (183) est fixée au bord de corps de la première partie plate (140) et au bord de corps de la troisième partie plate (160) au niveau de positions où les bords de corps sont sensiblement parallèles à l'axe longitudinal (X) et dans laquelle la première liaison (181) et la seconde liaison (183) sont agencées sur des positions, opposées l'une à l'autre, le long d'un axe transversal (Y), perpendiculaire à l'axe longitudinal (X).

9. Barre de connexion électrique (10) selon l'une quelconque des revendications 6 à 8, dans laquelle l'extension de la première liaison (181) est plus petite que l'extension de la seconde liaison (183).

10. Barre de connexion électrique (10) selon l'une quelconque des revendications 6 à 9, dans laquelle la troisième partie plate (160) comprend une seconde ouverture (189) située dans la section flexible (130), dans laquelle le bras (186) est formé pour dépasser dans la seconde ouverture (189), ce qui permet de limiter le mouvement de la première partie plate (140) en relation avec la deuxième partie plate (150) et la troisième partie plate (160).

11. Barre de connexion électrique (10) selon la revendication précédente, dans laquelle le bras (186) dépasse à travers la seconde ouverture (189) et dans laquelle l'extrémité de bras (187) est en contact avec une cinquième surface de contact (164) de la troisième partie plate (160) opposée à la quatrième surface de contact (162) pour garder la première surface de contact (142) de la première partie plate (140) et la deuxième surface de contact (152) de la deuxième partie plate (150), en outre la troisième surface de contact (154) de la deuxième partie plate (150) et la quatrième surface de contact (162) de la troisième partie plate (160) en contact étroit.

12. Barre de connexion électrique (10) selon l'une quelconque des revendications précédentes, dans laquelle la première partie de montage (110) comprend une première ouverture de connexion (210) et la seconde partie de montage (120) comprend une seconde ouverture de connexion (220).

13. Barre de connexion électrique (10) selon la revendication précédente, dans laquelle la première ouverture de connexion (210) et/ou la seconde ouverture de connexion (220) sont équipées d'une borne électrique (230).

14. Procédé de fabrication d'une barre de connexion électrique (10) selon l'une quelconque des revendications 1 à 5 comprenant les étapes de :
a) fourniture d'une feuille métallique (30) et d'une machine d'estampage outillée ;
b) introduction de la feuille métallique (30) dans la machine d'estampage ; **caractérisé en ce qu'**il comporte en outre les étapes de :
c) estampage de la première partie plate (140) et de la deuxième partie plate (140), ce qui permet de former le bras (186) et l'ouverture (188) ;
d) pliage de la première partie plate (140) et de la deuxième partie plate (140) en une configuration empilée, moyennant quoi la première liaison (181) limite le mouvement de la première partie plate (140) et de la deuxième partie plate (140) ;
e) retrait de la bande de support (20).
